# EUROPEAN PATENT SPECIFICATION

(11) **EP 2 381 798 B1**
(45) Date of publication and mention of the grant of the patent: **31.10.2018**
(21) Application number: 10736084.4
(22) Date of filing: 25.01.2010
(51) Int. Cl.: A23K 20/142, A23K 50/80, A23K 40/25

(54) **FEED ADDITIVE**
FUTTERZUSATZ
ADDITIF ALIMENTAIRE

(30) Priority: 28.01.2009 NO 20090414
(43) Date of publication of application: 02.11.2011
(60) Divisional application: 18194544.5
(73) Proprietor: Nutreco IP Assets B.V., 5831 JN Boxmeer (NL)
(72) Inventor: KOPPE, Wolfgang, M., N-4011 Stavanger (NO); OBACH, Alex, N-4012 Stavanger (NO); NANKERVIS, Leo, N-4014 Stavanger (NO)
(74) Representative: Håmsø Patentbyrå AS
(86) International application number: PCT/NO2010/000027
(87) International publication number: WO 2010/087715

(56) References cited:
- WO-A1-2010/010794
- KR-A- 20030 071 236
- R.E. OLSEN ET AL: "The replacement of fish meal with Antarctic krill, Euphausia superba in diets for Atlantic salmon, Salmo salar", AQUACULTURE NUTRITION, vol. 12, no. 4, 1 August 2006 (2006-08-01) , pages 280-290, XP055335694, GB ISSN: 1353-5773, DOI: 10.1111/j.1365-2095.2006.00400.x
- E.A.T. FLORETO ET AL: "The effects of krill hydrolysate-supplemented soya-bean based diets on the growth, colouration, amino and fatty acid profiles of juvenile American lobster, Homarus americanus", AQUACULTURE NUTRITION, vol. 7, no. 1, 5 March 2001 (2001-03-05), pages 33-43, XP055335695, GB ISSN: 1353-5773, DOI: 10.1046/j.1365-2095.2001.00154.x
- Trond Storebakken: "Atlantic salmon salmo salar" In: "Nutrient Requirements and Feeding of Finfish for Aquaculture", 1 January 2002 (2002-01-01), XP055335797, page 86, * page 86 *
- KLEIN: "Nutrition of salmonoid fishes: arginine and histidine requirements of chinook and coho salmon", THE JOURNAL OF NUTRITION, vol. 100, no. 9, 1 January 1970 (1970-01-01), page 1105, XP055016959, ISSN: 0022-3166
- RILEY ET AL.: 'Influence of dietary arginine and glycine content on thyroid function and growth of juvenile rainbow trout, Oncorhynchus mykiss' AQUACULTURE NUTRITION vol. 2, no. 4, 1996, pages 235 - 242, XP055108106
- R.P. WILSON: 'Amino acids and proteins.' FISH NUTRITION. SAN DIEGO, CA, pages 143 - 179, XP008168497
- S.P. LALL ET AL: "Quantitative arginine requirement of Atlantic salmon (Salmo salar) reared in sea water", AQUACULTURE, vol. 124, no. 1-4, 1 July 1994 (1994-07-01), pages 13-25, XP055335130, Amsterdam, NL ISSN: 0044-8486, DOI: 10.1016/0044-8486(94)90350-6

## Description

The invention relates to feed for fish, wherein the feed is produced by extrusion technology and where the feed contains an additive component. More particularly the invention relates to an extruded fish feed containing an increased amount of the amino acid arginine.

In the original and widest sense extrusion means to create an object having a fixed cross-sectional profile. This is done by pulling or pushing a formable material through a die opening having the desired cross-section. In the foodstuff industry and the feed industry, particularly in the fish feed industry, the notion of extrusion is used in a narrower sense. In these industries so-called extruders of the single screw and double screw types are utilised. The material being extruded is a mixture of protein raw materials, starch containing raw materials, fat, for example in the form of oils and water. The water may be added to the mixture in the form of water or steam. In addition the mixture may consist of minerals and vitamins and possibly colouring agents. The mixture may be heated beforehand in a so-called preconditioner where the heating takes place by adding steam to the mixture. Steam and water may also be added to the mass inside the extruder. In the extruder itself the pasty mass is forced by means of the screws toward a constriction in the outlet end of the extruder and further through a die plate where the mass gets a desired cross-sectional shape. On the outside of the die plate is normally positioned a rotating knife cutting the string coming out of the die holes to a desired length. Normally the pressure on the outside of the die plate will be equal to the ambient pressure. The extruded product is referred to as extrudate. Due to the pressure created inside the extruder, and the addition of steam to the mass, the temperature will exceed 100 °C and the pressure will be above atmospheric pressure in the mass before it is forced out of the die openings. This extrusion process is also referred to as cooking extrusion.

Cooking extrusion of material containing starch causes the starch granules to swell so that the crystalline starch in the granules are released and may unfold. This is referred to as gelatination of the starch. The starch molecules will form a network contributing to hold the extrudate together. Particularly in feed to carnivorous fish, starch-containing raw materials are added due to their properties as binding agent in the finished fish feed. The natural prey for carnivorous fish does not contain starch. Carnivorous fish have little or no digestive enzymes that may alter the starch to digestive sugars. Cooking of the starch makes it more digestible. This is partly due to the starch no longer being raw, and partly that the cooking process starts a decomposition of the starch to smaller sugar units being easier to digest.

Another effect of the cooking extrusion on the mixture of protein, carbohydrates and fat is that these will form complexes and bindings that may have both positive and negative effects on the digestibility of the mixture.

A further effect of the cooking extrusion is that the extrudate becomes porous. This is caused by the pressure drop and temperature drop over the die opening. The water in the extrudate will immediately expand and be freed as steam and leave behind a porous structure in the extrudate. This porous structure may be filled with oil in a later process stage. An extruded feed will typically contain between 18 and 30% of water after extrusion. After extrusion this feed undergoes a drying stage and a subsequent stage of oil coating. The end product contains approx. 10% of water or less and will thus be storage stable as the water content in such feed is so low that growth of fungus and mould is prevented and also that bacterial decay is avoided. After oil coating the feed is cooled and packaged.

The extrudate is thus different from a pressed feed. By a pressed feed is meant feed produced by means of a feed press. This process differs from extrusion in many ways. Less water and steam is utilised in the process. The feed mixture is forced through a die ring from the inside out by means of rollers rotating on the inside of the die ring. The temperature and pressure are lower than at extrusion and the product is not porous. The process causes that the starch is not as digestible as after extrusion. A pressed feed will normally contain less than 10% water after pressing and possible oil application. It is not necessary to dry a pressed feed. The feed is cooled before packaging.

By extrusion is in the following meant cooking extrusion by means of either a single screw extruder or a double screw extruder. By an extruded feed is meant a feed produced by cooking extrusion by means of a single screw extruder or a double screw extruder.

By a formulated fish feed is meant a feed composed of one or more sources of protein such as, but not limited to, marine protein as fish meal and krill meal, vegetable proteins as soy flour, rape seed flour, wheat gluten, maize gluten, lupine flour, pea flour, sunflower seed flour and rice flour, and offal as blood meal, bone meal, feather meal and chicken meal. By mixing different sources of protein each having their own amino acid composition it is within certain limits possible to achieve a desired amino acid profile in the feed adapted to the species of fish that the feed is meant for.

A formulated feed further contains such as fish oil and/or vegetable oils as rapeseed oil and soy oil as an energy source. A formulated feed also contains a binder as wheat or wheat flour, potato flour or tapioca flour to give the feed the desired strength and form stability.

A formulated feed further contains minerals and vitamins necessary to safeguard good growth and good health for the fish. The feed may further contain further additives such as colouring agents to achieve certain effects.

A formulated feed is thus a composed feed where the quantity ratios of proteins, fat, carbohydrates, vitamins, minerals and any other additives are calculated to be optimally adapted to the nutritional needs of the species of fish and the age of the fish. It is common to feed with only one type of feed and each piece of feed is thus nutritionally adequate.

By a dry, formulated feed is meant a feed of pressed or extruded type.

By anadromous fish is meant fish being hatched in fresh water and spending the fry phase in fresh water. After smoltification the fish migrates to brackish water and possibly seawater having full salinity. The fish returns to fresh water for spawning. Examples of anadromous fish are salmonids, for example Atlantic salmon (*Salmo salar*).

By salmonids is meant species belonging to the family Salmonidae.

When comparing the nutritional content of different feeds and type of feed it is important to take the water content into consideration. For pressed feed and extruded feed it is normal in commercial context, and also in many scientific papers, to state the feed composition on an as is basis. For feed containing a lot of, and also varying amounts of, water, it is normal to state the composition based on the dry substance. For an extruded feed the separate components will increase by 11% when these are given based on dry substance and the feed contains 10% of water.

Dry and pressed or extruded feed may have varying shape and size. A common shape is cylindrically shaped feed pieces where the length/diameter ratio normally is between 1 and 1.5. Such feed pieces are normally called pellets. The pellet size is adjusted to fit the size of the fish and the pellet diameter may thus be between 1 and 30 mm.

Fish, and particularly carnivorous fish need protein, fat minerals and vitamins to grow and to be of good health. Originally, in the breeding of carnivorous fish, whole or minced fish was used to cover the nutritional needs of the farmed fish. Minced fish mixed with dry raw materials of various kinds, such as fishmeal and starch, was termed soft feed. Farming of fish was gradually industrialised and the pressed feed type replaced soft feed. The pressed feed was gradually replaced by dry feed of the extruded type. Extruded feed is today nearly in control of the market within farming of a series of fish such as several salmonids, cod, halibut, sea bass and sea bream.

The dominating protein source in dry feed for fish has been various qualities of fishmeal. The fishmeal may be of north European origin or south American origin, but on a world basis other fish meal types are also utilised. Other animal protein sources are also utilised. Utilisation of blood meal, bone meal, feather meal and other types of flour produced from other offal such as chicken meal is also known. It is also known to utilise vegetable proteins such as wheat gluten, maize gluten, soy protein, lupine flour, pea flour, rapeseed flour, sunflower seed flour and rice flour.

For research purposes, particularly when the purpose is to study nutritional needs for individual components such as essential amino acids, so-called semi synthetic diets are often used. These have the advantage that the composition is well defined and that the raw materials used are standardised. Tests may thus be repeated with near identical compositions from one experiment to the next. For example may casein and gelatine be used as basic protein source as these are proteins having constant composition and quality. The binding agent may further be a defined alginate or a defined carbohydrate such as cellulose. This as opposed to fishmeal, which will vary in amino acid composition and fatty acid profile according to the species of fish being used as raw material and which contain varying amounts of biogenic amines according to the freshness of the raw materials before production of the flour. For research purposes smaller amounts of feed is needed and it may therefore be produced with relatively simple equipment. The raw materials may for example be mixed to a paste and feed may be shaped with a mincer where the paste is forced out through a holed disk. The strings are subsequently cut into suitable lengths. Such a feed will contain relatively much water, for example more than 20%, and it is described as wet feed or semi moist feed. This feed may be dried, but it may also be conserved by freezing until it is to be used. The nutritive substances in such a test feed will not be exposed to the same temperature loading as in a pressed feed and particularly in an extruded feed. Tests with such feed will therefore not capture or be influenced by the interactions between proteins, fat, carbohydrates and water and the positive or negative influences this has for the performance of the feed.

The nutritional need of salmon for arginine is described in Berge et al. 1997. Nutrition of Atlantic salmon (Salmo salar): The requirement and metabolism of arginine. Comp. Biochem: Physiol. 117A, 501-509. This study concludes that growth and protein retention data indicates a need for between 2.12 and 2.16% arginine on a weight basis of dry feed. This amounted to 5.0 - 5.1% of total protein amount in the feed. The conclusion relates to medium size salmon as the fish in the test weighed between 300 and 500 g at start of test and between 525 and 715 g at the end of the test. The authors conclude that this is somewhat higher than earlier reported need for arginine, and points to other studies stating a need for 1.19 to 1.8% arginine per kg dry feed for rainbow trout and 1.60% per kg dry feed for salmon. They also point to the revised data from National Research Council for arginine need for rainbow trout of 1.50% per kg dry feed. The authors comment this with the fish in the test grew poorly and that the feed had a high energy content. Outside the group getting basal test diet without extra arginine addition, the feed conversion ratio (FCR) was 1.39 while the specific growth ratio (SGR) was 0.34. For comparison the fish group on a control feed consisting of fishmeal as the protein source had an FCR of 0.94 and an SGR of 0.55, i.e. much better growth. The arginine content in the control feed was 2.77% per kg dry feed. This was a comparable level to the two test diets having the highest content of arginine. The control feed contained about the same energy as the rest of the diets as fishmeal contains approx. 10% fat and this is in addition to the added fish oil. All the feeds thus contained approximately 30% fat on a dry matter basis. The water content was 32% and the feed therefore had to be kept at -20 °C so as not to deteriorate. Such a feed is made by mixing the ingredients with water to a paste then being squeezed through a holed disc and subsequently to be cut into suitable lengths. From the prescription Suprex maize (extruded maize) and Reppin PE (potato starch) were used as binding agents. The control feed contained in addition Algebind (alginate) as binding agent.

The authors argue further that the difference in growth between the group that got test feed and the group that got control feed may lie in that the arginine additive in the form of free amino acid may work negatively on growth. They also refer to literature where free amino acids were covered with agar to slow down their absorption speed, and this resulted in better growth. The explanation may be that the faster absorption of the free amino acids leads to a temporary phase where there is an unfavourable imbalance in the relationship between the various amino acids, compared to when all the amino acids are basically bound in protein and thereby are absorbed with equal speed.

Plisetskaya et al. 1991. Effects of injected and dietary arginine on plasma insulin levels and growth of Pacific salmon and rainbow trout. Comp. Biochem. Physiol. 98A: 165-170. This study investigated the effect of increased arginine in feed to coho salmon (*Oncorhynchus kisutch*), Chinook salmon (*O. tshawytscha*) and rainbow trout (*O. mykiss*). The basic feed was a modification of diet H440 (National Research Council, 1981). This is a semi synthetic diet where the protein comes from casein and gelatine. Gelatine is also the binding agent together with alpha-cellulose. The feed further contains 15% fish oil on recipe basis, but before addition of water to the mixture. The authors do not state how the feed particles were produced. As the prescription contains 8% gelatine and 4.7% alpha-cellulose such a mixture will form a gel after water is added and following gelling. The feed particles may be formed before or after gelling. The basic feed contained 3.12% arginine based on a dry matter basis. To the basic feed was added increasing amounts of arginine so that one of the test feeds contained approx. 9% arginine.

Alevins of chinook salmon were fed for 2 months and grew from approx. 2 g to 9 g in this period. There was no difference between the group getting the basic diet and the group getting 3% extra (totally 5.4%) arginine in the feed. The group getting 6% extra arginine grew significantly less.

Alevins of coho salmon were fed for 1 month and grew from approx. 8 g to 10 g in this period. There was no significant difference in growth between the groups either they got basic diet or 1, 2 or 5% extra arginine in the feed.

Alevins of rainbow trout were fed for 2 months and grew from approx. 9 g to 50 - 57 g in this period. For rainbow trout there was a positive connection between increasing content of arginine in the feed and growth such that the group getting feed having 7.4% arginine showed the best growth. The authors comment that the group getting 7.4% arginine also ate the most and that FCR was higher for this group. In addition the hepatosomatic index was higher, i.e. the liver share of the body weight. This means that this group utilised the feed poorer.

In a new test with alevins of chinook salmon, these were fed for 8 weeks and grew from 1 g to approx. 3.5 g. The feed contained 4.2 and 4.8% arginine respectively. In addition two groups were given a further 6% arginine in addition to 4.2 and 4.8% arginine respectively each third day. The results showed a temporary better growth for the three groups getting the most arginine after 2 and 4 weeks. This effect was however gone after 6 weeks, and there was no significant weight difference after 6 and 8 weeks.

The authors write that optimal growth for alevins of rainbow trout and coho salmon was achieved with feed containing approx. 4.4% arginine on a dry substance basis, while the best SGR for chinook was with a feed containing 5.4% arginine on a dry substance basis. Nevertheless, they conclude their article with stating that for routine feeding of alevins a feed containing earlier recommended amounts of arginine is recommended.

Fournier et al. 2003. Excess dietary arginine affects urea excretion but does not improve N utilisation in rainbow trout Oncorhynchus mykiss and turbot Psetta maxima. Aquaculture, 217:559-576. In this study alevins of turbot and rainbow trout were given feed based on plant protein or fishmeal and with increasing amounts of arginine. The turbot had an average weight of 7.4 g at start of test while the rainbow trout weighed 9.3 g. The feed was wet pelleted and dried for 10 minutes at 80 °C and thereafter 10 minutes at room temperature before being sifted. Two sifting fractions of 2 and 3 mm were used in the test.

A total fat content of from 17.3% to 19.5% on a dry substance basis was in the feed for the rainbow trout. The arginine content was from 1.72% to 4.01% on a dry matter basis.

Olsen et al. 2006 disclose the replacement of fish meal with Antarctic krill, Euphausia superba in diets for Atlantic salmon, Salmo salar. (Aquaculture Nutrition, 12:280-290). Floreto et al. 2001 disclose the effects of krill hydrolysate-supplemented soya-bean based diets on the growth, colouration, amino and fatty acid profiles of juvenile American lobster, Homarus americanus. (Aquaculture Nutrition, 7:33-43). Sto-rebakken 2002 relates to energy utilization improvement by reducing dietary protein and increasing dietary fat. (Chapter 6,. Atlantic salmon, Salmo salar. In: Eds: Webster and Lim. Nutrient Requirements and Feeding of Finfish for Aquaculture. p 86 (ISBN 0851995195)). Klein et al. 1970 relate to arginine and histidine requirements of Chinook and coho salmon. (The Journal of Nutrition. 100:1105-1110). Lall et al. 1994 relate to quantitative arginine requirements of Atlantic salmon (Salmo salar) reared in sea water. (Aquaculture, 124:13-25).

Review of literature describing the need for arginine for salmonids and effects of adding arginine in excess amount than of the requirement, show that the results spread out. In some cases better growth is reported by increasing the dosage, but this improved weight may also be temporary. Other researchers have reported that the growth may be hampered at increased levels of arginine, and in some cases there is not observed any effect at all.

Salmonids spawns in fresh water and some species are anadromous fishes. In commercial farming of salmon and rainbow trout it is well known that the fish lose their appetite when it as smolt is ready for seawater and is transferred from fresh water to salt water. The fish may mope for several weeks after the transfer. For the fish farmer this means lost growth. It takes longer to get the fish to a size ready for butchering, particularly because growth is a daily compound interest effect. In fish farming there is therefore a need for a feed, which is readily accepted by fish recently transferred to salt water.

The object of the invention is to remedy or reduce at least one of prior art drawbacks.

The object is achieved by features stated in the below description and in the following claims.

It has surprisingly turned out that a raised level of the amino acid arginine added to an extruded fish feed has a favourable effect on growth in fish, particularly salmonids.

In a first aspect the invention relates to a method for preventing reduced growth for anadromous fish at transfer from fresh water to seawater in that the anadromous fish is fed with an extruded feed containing at least 3 percent by weight of the amino acid arginine and at least 20 percent fat by weight at least in a part of a period before or after transfer to seawater. The anadromous fish may be fed with an extruded feed containing at least 3 percent by weight of the amino acid arginine and at least 20 percent fat by weight in a period lasting at least one week inside a 4-week period prior to it being transferred to seawater. The anadromous fish may be fed with an extruded feed containing at least 3 percent by weight of the amino acid arginine and at least 20 percent fat by weight after transfer to seawater. The fish may be fed with an extruded feed containing at least 3 percent by weight of the amino acid arginine and at least 20 percent fat by weight both before and after it is transferred to seawater.

In a second aspect the invention relates to use of an extruded fish feed containing at least 3 percent by weight of the amino acid arginine and at least 20 percent fat by weight for feeding anadromous fish in connection with transfer of the fish from fresh water to seawater to prevent reduced growth. The anadromous fish may be fed before it is transferred to seawater. The anadromous fish may be fed in a period lasting at least one week inside a 4-week period prior to it being transferred to seawater. The anadromous fish may be fed after transfer to seawater. The anadromous fish may be fed in a period lasting at least 5 weeks inside a 10-week period after transfer to seawater.

It is also described a fish feed where the fish feed may be produced by extrusion and may contain at least 3 percent by weight of the amino acid arginine and up to 30 percent by weight of fat. By percent by weight is meant herein that the amount is stated relative to the total weight of the feed including water.

The feed may, when it is produced to cover the nutritional needs for marine fish, contain at least 15 percent fat by weight. Marine fish such as cod, pollock, sea bass and sea bream are fed a relatively lean feed. If these species of fish are fed with a feed having a high content of fat, the fat will either be deposited in the liver as for cod, or around the intestines as for sea bass and sea bream. This is not desirable since it is at the sacrifice of fillet yield. The ratio of amount of feed used to saleable product is not so favourable.

The feed to salmonids may contain at least 20 percent fat by weight. In another further embodiment feed to salmonids may contain 23 percent fat by weight. In another further embodiment feed to salmonids may contain 25 percent fat by weight. In another further embodiment feed to salmonids may contain 26 percent fat by weight and in another further embodiment feed to salmonids may contain 29 percent fat by weight. Salmonids are so-called fat fishes. They deposit fat in the fillet. Generally, they can make use of a large share of the fat in the feed to energy, while the protein in the feed is deposited in the musculature. This means that a high share of the supplied protein is utilised for growth. This is favourable because it gives an advantageous ratio between used feed and saleable product.

In the following are described examples of preferred embodiments illustrated in the accompanying drawings, wherein:
- Fig. 1: shows growth results from example 1;
- Fig. 2: shows daily feed intake per vessel in example 2;
- Fig. 3: shows overall feed intake per tank in the fresh water phase in example 2;
- Fig. 4: shows SGR for each test group in the fresh water phase in example 2;
- Fig. 5: shows SGR for each test group in the seawater phase and over the whole study period in example 2;
- Fig. 6: shows growth results from example 3; and
- Fig. 7: shows feed intake per day in example 3.

### Example 1

Atlantic salmon having an average starting weight of 89 g were distributed in two vessels of 2 x 2 m. There were 300 fish in each vessel and the biomass in each vessel was 26.7 kg. In the first vessel the fish were fed with the commercial product Nutra transfer (Skretting) which is an extruded fish feed. The feed size was 3 mm. Feeding was done at 1.5% of the body weight per day. The water temperature was 7.5 °C. The fish were fed for 28 days before being transferred to seawater. Before transfer to seawater the lighting regime for the fish for the last 12 weeks was: 6 weeks with 12 hours light and 12 hours darkness followed by 6 weeks with 24 hours light. The fish were thus exposed to light all day in the test period. The fish were transferred on the 29 of December.

The fish in the second vessel was fed with Nutra transfer coated with 1% crystalline arginine (Kyowa Hako). The coating was carried out as so-called top-coating as the crystalline arginine was mixed with finished feed and further 0.8% of fish oil, calculated based on the original feed amount, was added for the arginine to adhere to the feed surface. The feed rate and water temperature were the same for the fish in both vessels.

Nutra transfer contains 47% protein, 23% fat and 8% water. The content of arginine was 2.45% in the feed given to the fish in the first vessel and 3.1% in the arginine-supplemented feed.

The fish were weighed at transfer to seawater. Average weight for the fish in both vessels was 113 g. No weight difference existed between the vessels.

The fish from the first vessel were distributed in three first outdoor pens of 5 x 5 m having 100 fish in each pen. These were fed with the commercial product Spirit HH (Skretting) which is an extruded fish feed containing 47% protein, 26% fat and 6% water. The feed size was 3 mm. Feed was supplied at 1.5% of body weight per day. The seawater temperature averaged 8 °C. The fish were fed for 35 days until the test was finished. Natural light conditions existed without use of artificial lighting.

The fish from the second vessel were distributed in three second outdoor pens of 5 x 5 m having 100 fish in each pen. These were fed with Spirit HH coated with 1% crystalline arginine. The feed rate was the same for the fish in all the six pens.

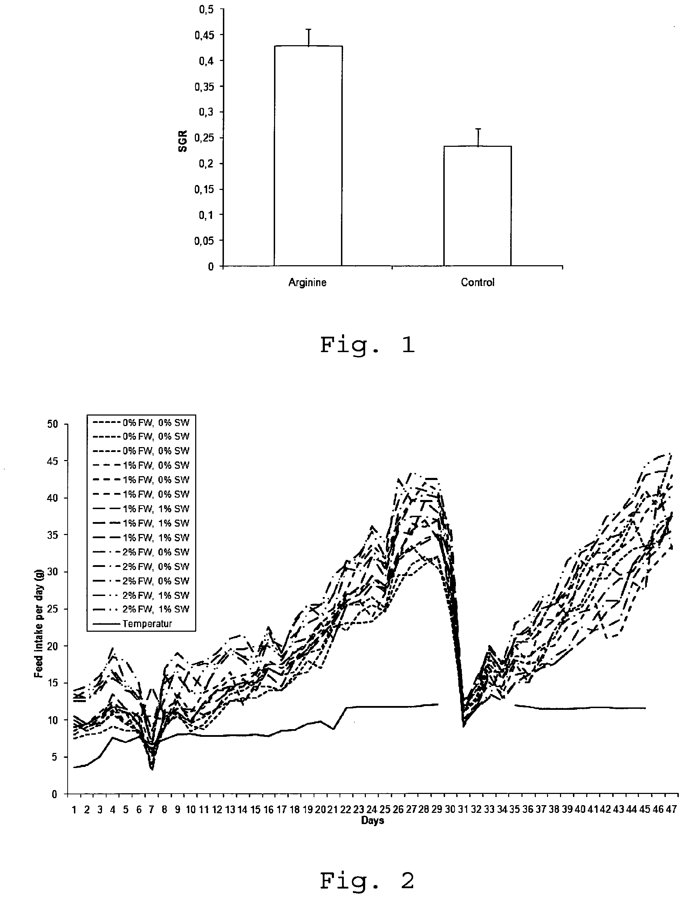

As shown in figure 1 the fish fed with the arginine-supplemented feed grew significantly better than the fish fed with standard Spirit HH. Specific growth rate (SGR) was 0.427 and 0.233 respectively. The fish getting a raised amount of arginine showed an SGR that was 83% higher than the control fish.

### Example 2

This study was carried out as a crossover-study with Atlantic salmon as shown in table 1.

**Table 1**

| Group identification | Arginine-supplementing (% of original feed weight) | |
|---|---|---|
| | Fresh water | Seawater |
| A | 0 | 0 |
| B | 1 | 0 |
| C | 1 | 1 |
| D | 2 | 0 |
| E | 2 | 1 |

With the exception of group E which was distributed in two vessels in the fresh water phase and to vessels in the seawater phase, the other groups were distributed in three vessels in the fresh water phase and the seawater phase respectively. At the beginning of the study the fish average weight was 105 g. In the fresh water phase the fish were fed with an extruded feed containing 47% protein, 23% fat and 8% water. In the seawater phase the fish were fed with an extruded feed containing 45% protein, 29% fat and 7% water. The contents are given as percent weight of the feed on a wet weight basis. The pellet size was 3 mm for both feed types. The feeding rate was 0.8% of the body weight per day in both the fresh water phase and the seawater phase.

The water temperature in the fresh water phase varied between 3.6 °C and 9 °C and in the seawater phase between 11.5 °C and 11.7 °C. After 30 days in fresh water the fish were transferred to seawater and attended for 39 days before the study was concluded. In the fresh water phase the fish were treated with the same lighting regime as described in example 1. In the seawater phase the lighting regimes was 24-hour lighting each day. The fish were transferred the 13^{th} of March and the fish were not fed for the first 4 days in seawater.

Table 2 shows analysed content of arginine in the various diets.

**Table 2**

| Diet code | Water type | Analysed arginine content (% dry weight) |
|---|---|---|
| I | Fresh | 2.83 |
| II | Fresh | 3.45 |
| III | Fresh | 4.22 |
| IV | Sea | 2.67 |
| V | Sea | 3.45 |

The daily feed intake per vessel through the study is shown in figure 2. The figure shows clearly how the feed intake drops in the period just after the fresh water in the vessel is replaced by seawater. At the conclusion of the fresh water phase, the fish were weighed in bulk and taken back to the same vessel. The fresh water supply was stopped thereafter and the seawater supply opened.

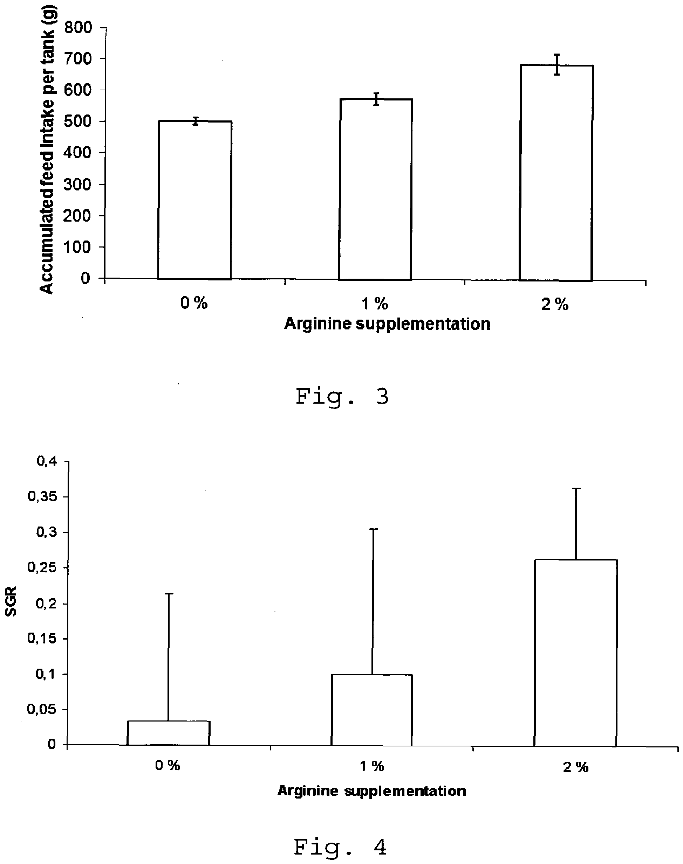

The total feed intake per vessel for the whole of the fresh water period is shown in figure 3, and the appurtenant SGR values are shown in figure 4. These two figures show the positive effect of arginine admixture for growth in fresh water.

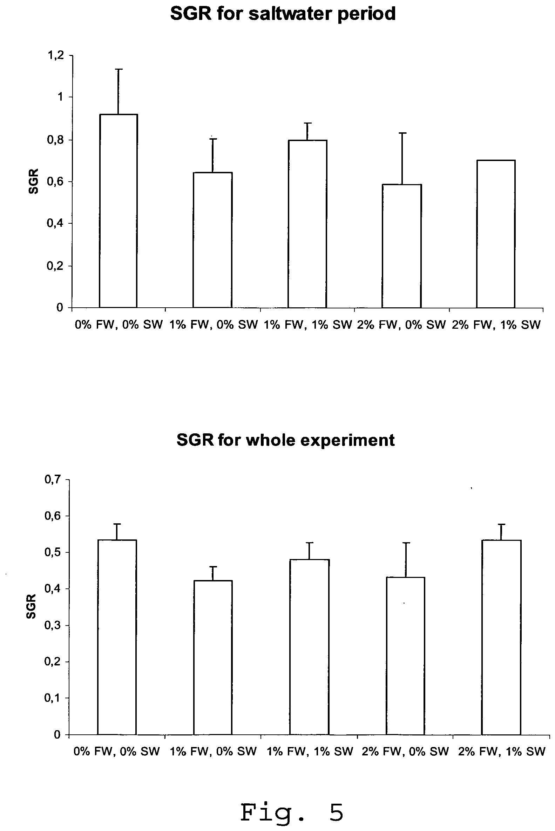

Figure 5 shows SGR for the seawater period and SGR for the whole study. As appearing from figure 2, the fish in all groups picked up feed quickly after transfer to seawater. An explanation to this may be that the fish was stressed very little in the changeover to the seawater phase. SGR in the seawater phase was considerably better than in the fresh water phase for all the groups, and this caused the weight differences between the groups from the fresh water phase to have disappeared at conclusion of the study.

### Example 3

In this study the effect of water temperature and the additional amount of arginine were investigated for Atlantic salmon in seawater. The fish were transferred to seawater 35 days before the study started. In this period the fish were fed the commercial product Spirit Pluss (Skretting). The fish were, prior to transfer to seawater exposed to 6 weeks with light for 12 hours and darkness for 12 hours per day, followed by 6 weeks with 24 hours light each day. After transfer the fish were exposed to 24 hours light each day. The fish were transferred to seawater on the 19^{th} of May.

Atlantic salmon having an average starting weight of 114 g were distributed in eighteen 100-litre vessels containing 20 fish in each vessel. The biomass in each vessel was 2.28 kg. In the study the fish were fed with the same feed as in example 2, more particularly feed having diet code III, IV and V having 2%, 0% and 1% extra added arginine respectively. Feeding was done at 1% in relation to body weight per day at the beginning of the study, and this was increased to 2% per day at the conclusion of the study. The fish were split in groups getting either no extra amount of arginine or feed coated with 1% or 2% extra arginine. The study took place at two water temperatures 8 °C and 12 °C. The feed rate was the same for all fish groups. The study lasted for 35 days.

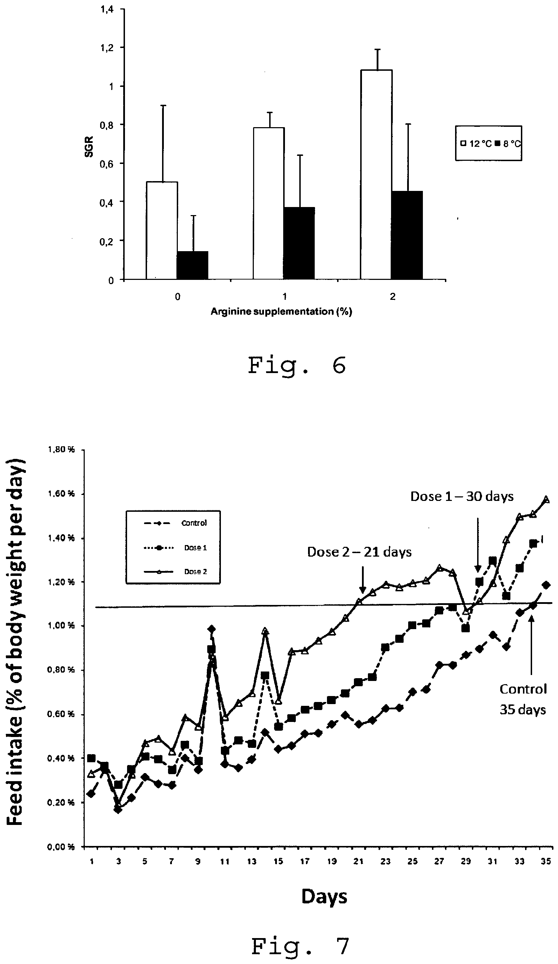

The results are shown in figure 6. As expected the fish grew better at 12 °C than at 8°C. The SGR values for the fish at 8 °C are very low. This may be due to the fish developing winter sores during the study. Figure 6 shows however that an addition of an increasing amount of arginine from 0% to 2% in the feed had a positive effect on growth. At 12 °C the control group had an SGR of 0.5, while the group getting 2% extra arginine had more than double the SGR: 1.08.

When fish are transferred to seawater it takes some time before the feed intake is back to the level before the transfer to seawater. In this study the fish showed a poor appetite from transfer to seawater and up to start of the study. Assuming that normal feed uptake constitutes 1.1% of body weight per day, it took a further 35 days before the control group at 12 °C was back to normal feed uptake as shown in figure 7. The two other groups used 30 days and 21 days at 1% and 2% supplement of arginine respectively before they were back to normal feed uptake.

## Claims

1. A method to prevent reduced growth for anadromous fish at transfer from fresh water to seawater, **characterised in that** the anadromous fish is fed with an extruded feed containing at least 3 percent by weight of the amino acid arginine and at least 20 percent fat by weight at least in a part of a period before or after transfer to seawater.

2. A method according to claim 1, **characterised in that** the anadromous fish is fed with an extruded feed containing at least 3 percent by weight of the amino acid arginine and at least 20 percent fat by weight in a period lasting for at least one week within a 4-week period before transfer to seawater.

3. A method according to claim 1, **characterised in that** the anadromous fish is fed with an extruded feed containing at least 3 percent by weight of the amino acid arginine and at least 20 percent fat by weight after transfer to seawater.

4. Utilisation of an extruded fish feed containing at least 3 percent by weight of the amino acid arginine and at least 20 percent fat by weight for feeding anadromous fish in connection with transfer of the fish from fresh water to seawater to prevent reduced growth.

5. Utilisation of an extruded fish feed according to claim 4, where the anadromous fish is fed before transfer to seawater.

6. Utilisation of an extruded fish feed according to claim 5, where the anadromous fish is fed in a period lasting at least one week within a 4-week period before transfer to seawater.

7. Utilisation of an extruded fish feed according to claim 4, where the anadromous fish is fed after transfer to seawater.

8. Utilisation of an extruded fish feed according to claim 7, where the anadromous fish is fed in a period lasting at least 5 weeks within a 10-week period after transfer to seawater.

## Patentansprüche

1. Verfahren zur Verhinderung eines verminderten Wachstums bei anadromen Fischen beim Transfer von Süßwasser nach Meerwasser, **dadurch gekennzeichnet, dass** der anadrome Fisch mindestens in einem Teil eines Zeitraums vor oder nach dem Transfer nach Meerwasser mit einem extrudierten Futter gefüttert wird, welches mindestens 3 Gewichtsprozent der Aminosäure Arginin und mindestens 20 Gewichtsprozent Fett enthält.

2. Verfahren nach Anspruch 1, **dadurch gekennzeichnet, dass** der anadrome Fisch in einem Zeitraum von mindestens einer Woche innerhalb eines 4-wöchigen Zeitraums vor dem Transfer nach Meerwasser mit einem extrudierten Futter gefüttert wird, welches mindestens 3 Gewichtsprozent der Aminosäure Arginin und mindestens 20 Gewichtsprozent Fett enthält.

3. Verfahren nach Anspruch 1, **dadurch gekennzeichnet, dass** der anadrome Fisch nach dem Transfer nach Meerwasser mit einem extrudierten Futter gefüttert wird, welches mindestens 3 Gewichtsprozent der Aminosäure Arginin und mindestens 20 Gewichtsprozent Fett enthält.

4. Verwendung eines extrudierten Fischfutters, welches mindestens 3 Gewichtsprozent der Aminosäure Arginin und mindestens 20 Gewichtsprozent Fett enthält, zur Fütterung anadromer Fische in Verbindung mit einem Transfer der Fische von Süßwasser nach Meerwasser, um vermindertes Wachstum zu verhindern.

5. Verwendung eines extrudierten Fischfutters nach Anspruch 4, wobei der anadrome Fisch vor dem Transfer nach Meerwasser gefüttert wird.

6. Verwendung eines extrudierten Fischfutters nach Anspruch 5, wobei der anadrome Fisch in einem Zeitraum von mindestens einer Woche innerhalb eines 4-wöchigen Zeitraums vor dem Transfer nach Meerwasser gefüttert wird.

7. Verwendung eines extrudierten Fischfutters nach Anspruch 4, wobei der anadrome Fisch nach dem Transfer nach Meerwasser gefüttert wird.

8. Verwendung eines extrudierten Fischfutters nach Anspruch 7, wobei der anadrome Fisch in einem Zeitraum von mindestens 5 Wochen innerhalb eines 10-wöchigen Zeitraums nach der Überführung nach Meerwasser gefüttert wird

## Revendications

1. Un procédé destiné à empêcher une croissance réduite pour poissons anadromes au moment **du transfert depuis l'eau douce vers l'eau salée, caractérisé en ce que** les poissons anadromes sont nourris avec un aliment extrudé comprenant au moins 3 pourcent en **poids de l'acide** aminé arginine et au moins 20 pourcent en **poids de graisse, au moins en partie d'une période** avant ou après le transfert **vers l'eau salée.**

2. Un procédé selon la revendication 1, **caractérisé en ce que** les poissons anadromes sont nourris avec un aliment extrudé comprenant au moins 3 pourcent en poids de l'acide aminé arginine et au moins 20 pourcent en poids des graisse, en une période qui dure au moins une semaine dans une période de quatre semaines avant le transfert **vers l'eau salée.**

3. Procédé selon la revendication 1, **caractérisé en ce que** les poissons anadromes sont nourris **avec un aliment extrudé contenant au moins 3 pourcent en poids de l'acide aminé arginine** et au moins 20 pourcent en poids de graisse **après le transfert vers l'eau salée.**

4. L'utilisation d'un aliment extrudé pour poissons contenant au moins 3 pourcent en poids de l'acide aminé arginine et au moins 20 pourcent en poids de graisse pour nourrir des poissons anadromes en connexion avec le transfert des poissons depuis l'eau douce vers l'eau salée pour empêcher une croissance réduite.

5. L'utilisation d'un aliment extrudé pour poissons selon la revendication 4, où les poissons anadromes sont nourris avant le transfert vers l'eau salée.

6. L'utilisation d'un aliment extrudé pour poissons selon la revendication 5, où les poissons anadromes sont nourris en une période qui dure au moins une semaine dans une période de 4 semaines avant le transfert vers l'eau salée.

7. L'utilisation d'un aliment extrudé pour poissons selon la revendication 4, où les poissons anadromes sont nourris après le transfert vers l'eau salée.

8. L'utilisation d'un aliment extrudé pour poissons selon la revendication 7, où les poissons anadromes sont nourris en une période qui dure au moins 5 semaines dans une période de 10 semaines après le transfert **vers l'eau salée.**
